# EUROPÄISCHE PATENTANMELDUNG

(11) **EP 4 375 007 A1**
(43) Veröffentlichungstag der Anmeldung: **29.05.2024**
(21) Anmeldenummer: 22209304.9
(22) Anmeldetag: 24.11.2022
(51) Int. Cl.: B23P 19/04, B60Q 1/00, F21S 41/00

(54) **VERFAHREN ZUR AUTOMATISIERTEN ASSEMBLIERUNG EINES BAUTEILS FÜR EINEN KRAFTFAHRZEUGSCHEINWERFER**

(71) Anmelder: ZKW Group GmbH, 3250 Wieselburg (AT)
(72) Erfinder: Jackl, Christian, 3250 Wieselburg (AT); Mitterlehner, Stefan, 3240 Mank (AT)
(74) Vertreter: Patentanwaltskanzlei Matschnig & Forsthuber OG

(57) **Zusammenfassung**

Verfahren zur automatisierten Assemblierung eines Bauteils (1) für einen Kraftfahrzeugscheinwerfer, wobei das Verfahren die folgenden chronologischen Schritte aufweist: Bereitstellen einer ersten Bauteilkomponente (1a) und einer zweiten Bauteilkomponente (1b), wobei die erste Bauteilkomponente (1a) ein erstes Aufnahmeelement (4a) mit einem ersten Kontaktabschnitt (6a) und ein zweites Aufnahmeelement (4b) mit einem zweiten Kontaktabschnitt (6b) aufweist, Bereitstellen einer Assemblierungsvorrichtung mit einer Greifarmvorrichtung (7), welche einen ersten Greifarm (7a) mit einem ersten Halteabschnitt (8a) und einen zweiten Greifarm (7b) mit einem zweiten Halteabschnitt (8b) aufweist, Aufgreifen der ersten Bauteilkomponente (1a) mit der Greifarmvorrichtung (7), sodass die erste Bauteilkomponente (1a) gehalten und gegen ein Verdrehen gesichert ist, Positionieren der aufgegriffenen ersten Bauteilkomponente (1a) an der zweiten Bauteilkomponente (1b), Assemblieren der ersten Bauteilkomponente (1a) an der zweiten Bauteilkomponente (1b) zur Ausbildung des Bauteils (1).

## Beschreibung

Die Erfindung betrifft ein Verfahren zur automatisierten Assemblierung eines Bauteils für einen Kraftfahrzeugscheinwerfer.

Die Erfindung betrifft ferner ein System, umfassend ein Bauteil für einen Kraftfahrzeugscheinwerfer und eine Greifarmvorrichtung für eine Assemblierungsvorrichtung.

Die Erfindung betrifft weiters ein Bauteil für einen Kraftfahrzeugscheinwerfer.

Die Erfindung betrifft überdies einen Kraftfahrzeugscheinwerfer umfassend ein Bauteil.

Im Stand der Technik sind Verfahren zur automatisierten Assemblierung von Bauteilen bekannt. Üblicherweise arbeiten diese Verfahren mit Assemblierungsrobotern, welche Bauteile mit Greifarmen aufgreifen und assemblieren. Bekannt ist, dass das Aufgreifen und Halten einer Bauteilkomponente mittels einer Mindestdruckkraft erfolgt, welche von den Greifarmen auf die Bauteilkomponente ausgeübt wird, oder, dass die Bauteilkomponente mittels einer Saugnapfvorrichtung aufgegriffen und gehalten wird. Insbesondere bei optischen bzw. filigranen Bauteilkomponenten für Kraftfahrzeugscheinwerfer haben sich die bekannten Mittel zum Aufgreifen und Halten als nicht zweckdienlich erwiesen, da der zum Aufgreifen erforderliche Mindestdruck bereits zu hoch ist und zu Beschädigungen an den optischen Bauteilkomponenten führt und im Bereich der Kraftfahrzeugscheinwerfer Bauteilkomponenten für den Einsatz einer Saugnapfvorrichtung in der Regel zu klein bzw. zu filigran ausgebildet sind.

Die Aufgabe der vorliegenden Erfindung besteht darin, die Nachteile des Standes der Technik zu lindern bzw. zu beseitigen. Die Erfindung setzt sich daher insbesondere zum Ziel, ein verbessertes Verfahren zur automatisierten Assemblierung eines Bauteils für einen Kraftfahrzeugscheinwerfer zu schaffen, bei welchem Bauteilkomponenten sicher und beschädigungsfrei assembliert werden.

Diese Aufgabe wird durch ein Verfahren mit den Merkmalen von Anspruch 1 gelöst. Die Aufgabe wird ferner durch ein System nach Anspruch 13, ein Bauteil nach Anspruch 14 und einen Kraftfahrzeugscheinwerfer nach Anspruch 15 gelöst. Bevorzugte Ausführungen sind in den abhängigen Ansprüchen angegeben.

Erfindungsgemäß weist das Verfahren die folgenden chronologischen Schritte auf:
* Bereitstellen einer ersten Bauteilkomponente und einer zweiten Bauteilkomponente, welche derart ausgestaltet sind, zusammen in einem assemblierten Zustand ein Bauteil für einen Kraftfahrzeugscheinwerfer auszubilden, wobei die erste Bauteilkomponente ein erstes Aufnahmeelement an einer ersten Seite der ersten Bauteilkomponente und ein zweites Aufnahmeelement an einer, der ersten Seite gegenüberliegenden, zweiten Seite der ersten Bauteilkomponente aufweist, wobei das erste Aufnahmeelement einen ersten Kontaktabschnitt und das zweite Aufnahmeelement einen zweiten Kontaktabschnitt aufweist, wobei an dem ersten Kontaktabschnitt eine Ausnehmung oder Ausbuchtung und an dem zweiten Kontaktabschnitt eine Ausnehmung oder Ausbuchtung ausgebildet ist,
* Bereitstellen einer Assemblierungsvorrichtung zur automatisierten Assemblierung der ersten Bauteilkomponente an der zweiten Bauteilkomponente zum Ausbilden des Bauteils, wobei die Assemblierungsvorrichtung eine ansteuerbare Greifarmvorrichtung mit einem ersten Greifarm und einem zweiten Greifarm aufweist, wobei die Greifarmvorrichtung dazu eingerichtet ist, durch ein Zusammenwirken des ersten Greifarms mit dem zweiten Greifarm die erste Bauteilkomponente aufzugreifen, wobei vorzugsweise der erste Greifarm parallel zu dem zweiten Greifarm angeordnet ist, wobei die Assemblierungsvorrichtung dazu eingerichtet ist, die aufgegriffene erste Bauteilkomponente an der zweiten Bauteilkomponente zur Ausbildung des Bauteils zu assemblieren, wobei an dem ersten Greifarm ein zu der Ausnehmung oder Ausbuchtung des ersten Kontaktabschnitts komplementär ausgestalteter erster Halteabschnitt ausgebildet ist, wobei an dem zweiten Greifarm ein zu der Ausnehmung oder Ausbuchtung des zweiten Kontaktabschnitts komplementär ausgestalteter zweiter Halteabschnitt ausgebildet ist, wobei der erste Halteabschnitt und der zweite Halteabschnitt entlang einer Hauptachse der Greifarmvorrichtung angeordnet sind, wobei im aufgegriffenen Zustand der ersten Bauteilkomponente durch die Greifarmvorrichtung der erste Greifarm an dem ersten Kontaktabschnitt derart angreift, dass der erste Halteabschnitt in die Ausnehmung oder Ausbuchtung des ersten Kontaktabschnitts eingreift und der zweite Greifarm an dem zweiten Kontaktabschnitt derart angreift, dass der zweite Halteabschnitt in die Ausnehmung oder Ausbuchtung des zweiten Kontaktabschnitts eingreift, wobei durch die Eingriffe die erste Bauteilkomponente im Wesentlichen zwischen dem ersten Greifarm und dem zweiten Greifarm gehalten und gegen eine Verdrehung um die Hauptachse gesichert ist,
* Positionieren der Greifarmvorrichtung an der ersten Bauteilkomponente derart, dass der erste Greifarm an dem ersten Kontaktabschnitt des ersten Aufnahmeelements und der zweite Greifarm an dem zweiten Kontaktabschnitt des zweiten Aufnahmeelements angreifen können,
* Aufgreifen der ersten Bauteilkomponente durch ein Zusammenwirken des ersten Greifarms mit dem zweiten Greifarm derart, dass nach dem Aufgreifen der erste Halteabschnitt in die Ausnehmung oder Ausbuchtung des ersten Kontaktabschnitts und der zweite Halteabschnitt in die Ausnehmung oder Ausbuchtung des zweiten Kontaktabschnitts eingreift, sodass die erste Bauteilkomponente gehalten und gegen ein Verdrehen um die Hauptachse gesichert ist,
* Positionieren der aufgegriffenen ersten Bauteilkomponente an der zweiten Bauteilkomponente mittels der Assemblierungsvorrichtung derart, dass die erste Bauteilkomponente an der zweiten Bauteilkomponente zur Ausbildung des Bauteils assemblierbar ist,
* Assemblieren der ersten Bauteilkomponente an der zweiten Bauteilkomponente zur Ausbildung des Bauteils.

Dadurch ergibt sich der Vorteil, dass die erste Bauteilkomponente sicher gehalten wird und beschädigungsfrei bleibt, da das erste Aufnahmeelement und das zweite Aufnahmeelement jeweils von einer Seite der ersten Bauteilkomponente abstehen und damit der Bereich, an welchem die erste Bauteilkomponente an der zweiten Bauteilkomponente assembliert wird, frei von den Greifarmen bleibt. Insbesondere ist durch die Ausgestaltung des ersten Kontaktabschnitts, des zweiten Kontaktabschnitts, des ersten Halteabschnitts und des zweiten Halteabschnitts eine im Vergleich zum Stand der Technik geringere Druckkraft nötig, um die erste Bauteilkomponente sicher und zuverlässig aufzugreifen und zu halten. Beim Aufgreifen der ersten Bauteilkomponente mit der Greifarmvorrichtung werden insbesondere der erste Greifarm und der zweite Greifarm relativ zu einander bewegt.

Es kann vorgesehen sein, dass sich das erste Aufnahmeelement von der ersten Seite der ersten Bauteilkomponente und sich das zweite Aufnahmeelement von der zweiten Seite der ersten Bauteilkomponente weg erstrecken. Insbesondere weist die erste Bauteilkomponente eine Längserstreckung auf, wobei sich das erste Aufnahmeelement und das zweite Aufnahmeelement jeweils im Wesentlichen entlang der Längserstreckung in entgegengesetzte Richtungen, ausgehend von einem Mittelpunkt der ersten Bauteilkomponente, weg erstrecken.

Es kann vorgesehen sein, dass der erste Halteabschnitt und der zweite Halteabschnitt jeweils in einer Ebene liegen, welche im Wesentlichen orthogonal auf die Hauptachse orientiert sind, wobei vorzugsweise der erste Greifarm eine Längsachse und der zweite Greifarm eine Längsachse aufweisen, wobei die Längsachsen jeweils orthogonal auf die Hauptachse orientiert sind.

Es kann vorgesehen sein, dass die erste Bauteilkomponente einen Assemblierungsabschnitt und die zweite Bauteilkomponente einen Assemblierungsgegenabschnitt aufweist, wobei im assemblierten Zustand die erste Bauteilkomponente mit dem Assemblierungsabschnitt an dem Assemblierungsgegenabschnitt der zweiten Bauteilkomponente assembliert ist.

Es kann vorgesehen sein, dass der Assemblierungsabschnitt an einer von der ersten Seite und der zweiten Seite unterschiedlichen dritten Seite der ersten Bauteilkomponente angeordnet ist.

Es kann vorgesehen sein, dass die erste Bauteilkomponente derart ausgestaltet ist, dass die dritte Seite orthogonal zur ersten Seite und/oder zweiten Seite ist.

Es kann vorgesehen sein, dass die erste Bauteilkomponente ein optisches Bauteil, beispielsweise eine Linse, ein Mikrolinsen-Array oder ein Mikrospiegelaktor-Element umfasst, welches einen optisch wirksamen Bereich und einen optisch unwirksamen Bereich aufweist.

Es kann vorgesehen sein, dass das erste Aufnahmeelement und das zweite Aufnahmeelement jeweils an dem optisch unwirksamen Bereich und vorzugsweise der Assemblierungsabschnitt an dem optisch wirksamen Bereich ausgebildet sind. Dadurch ergibt sich der Vorteil, dass der optisch wirksame Bereich während der Assemblierung des Bauteils beschädigungsfrei bleibt.

Es kann vorgesehen sein, dass der optisch unwirksame Bereich im Wesentlichen um den optisch wirksamen Bereich herum angeordnet ist.

Es kann vorgesehen sein, dass die zweite Bauteilkomponente zumindest eine oder mehrere der folgenden Komponenten umfasst: ein Leuchtmittel, vorzugsweise umfassend eine Kühlvorrichtung zur Kühlung des Leuchtmittels, zur Abstrahlung von Licht auf die erste Bauteilkomponente, eine Leiterplatte zur Ansteuerung des Leuchtmittels, eine Haltevorrichtung zum Halten der ersten Bauteilkomponente oder eine beliebige Kombination aus diesen Komponenten. Vorzugsweise umfasst die zweite Bauteilkomponente eine Leiterplatte mit einem Leuchtmittel zur Abstrahlung von Licht auf die erste Bauteilkomponente und eine Kühlvorrichtung zur Kühlung des Leuchtmittels.

Es kann vorgesehen sein, dass das erste Aufnahmeelement und das zweite Aufnahmeelement einstückig mit der ersten Bauteilkomponente ausgebildet sind, wobei vorzugsweise die erste Bauteilkomponente, das erste Aufnahmeelement und das zweite Aufnahmeelement zusammen einstückig mit einem Spritzgussverfahren hergestellt sind.

Es kann vorgesehen sein, dass sich die Ausnehmung oder Ausbuchtung an dem ersten Kontaktabschnitt entlang von zumindest zwei Richtungen erstreckt, wobei sich die Ausnehmung oder Ausbuchtung an dem zweiten Kontaktabschnitt entlang von zumindest zwei Richtungen erstreckt. Dadurch ergibt sich der Vorteil, dass das erste Bauteil im aufgegriffenen Zustand gegen ein Verdrehen um die Hauptachse gesichert ist. Die Ausbuchtung bzw. Ausnehmung kann beispielsweise kreuzförmig, schlitzförmig, x-förmig, o.ä. ausgestaltet sein.

Erfindungsgemäß ist ein System vorgesehen, umfassend ein Bauteil für einen Kraftfahrzeugscheinwerfer und eine Greifarmvorrichtung für eine Assemblierungsvorrichtung zur automatisierten Assemblierung des Bauteils,
wobei das Bauteil eine erste Bauteilkomponente und eine zweite Bauteilkomponente aufweist, welche zusammen in einem assemblierten Zustand das Bauteil ausbilden, wobei die erste Bauteilkomponente ein erstes Aufnahmeelement an einer ersten Seite der ersten Bauteilkomponente und ein zweites Aufnahmeelement an einer, der ersten Seite gegenüberliegenden, zweiten Seite der ersten Bauteilkomponente aufweist, wobei das erste Aufnahmeelement einen ersten Kontaktabschnitt und das zweite Aufnahmeelement einen zweiten Kontaktabschnitt aufweist, wobei an dem ersten Kontaktabschnitt eine Ausnehmung oder Ausbuchtung und an dem zweiten Kontaktabschnitt eine Ausnehmung oder Ausbuchtung ausgebildet ist,
wobei die Greifarmvorrichtung einen ersten Greifarm und einen zweiten Greifarm aufweist, wobei die Greifarmvorrichtung an einem Assemblierungsroboter anordenbar und durch diesen ansteuerbar ausgebildet ist, und dazu eingerichtet ist, durch ein Zusammenwirken des ersten Greifarms mit dem zweiten Greifarm die erste Bauteilkomponente aufzugreifen, wobei vorzugsweise der erste Greifarm parallel zu dem zweiten Greifarm angeordnet ist, wobei an dem ersten Greifarm ein zu der Ausnehmung oder Ausbuchtung des ersten Kontaktabschnitts komplementär ausgestalteter erster Halteabschnitt und an dem zweiten Greifarm ein zu der Ausnehmung oder Ausbuchtung des zweiten Kontaktabschnitts komplementär ausgestalteter zweiter Halteabschnitt derart ausgebildet ist, dass im aufgegriffenen Zustand der ersten Bauteilkomponente durch die Greifarmvorrichtung der erste Greifarm an dem ersten Kontaktabschnitt derart angreift, dass der erste Halteabschnitt in die Ausnehmung oder Ausbuchtung des ersten Kontaktabschnitts eingreift und der zweite Greifarm an dem zweiten Kontaktabschnitt derart angreift, dass der zweite Halteabschnitt in die Ausnehmung oder Ausbuchtung des zweiten Kontaktabschnitts eingreift, wobei der erste Halteabschnitt und der zweite Halteabschnitt entlang einer Hauptachse der Greifarmvorrichtung angeordnet sind, wobei die Eingriffe derart sind, dass die erste Bauteilkomponente im Wesentlichen zwischen dem ersten Greifarmabschnitt und dem zweiten Greifarmabschnitt haltbar und gegen eine Verdrehung relativ zu der Greifarmvorrichtung sicherbar ist.

Erfindungsgemäß ist ein Bauteil für einen Kraftfahrzeugscheinwerfer vorgesehen, wobei das Bauteil mit einem erfindungsgemäßen Verfahren zur automatisierten Assemblierung assembliert wurde.

Erfindungsgemäß ist ein Kraftfahrzeugscheinwerfer vorgesehen, umfassend ein Bauteil, welches mit einem erfindungsgemäßen Verfahren zur automatisierten Assemblierung assembliert wurde.

Im Rahmen dieser Beschreibung sind die Begriffe "oben", "unten", "horizontal", "vertikal" als Angaben der Ausrichtung zu verstehen, wenn das Bauteil in normaler Benutzungsstellung angeordnet ist, nachdem es in einem Kraftfahrzeugscheinwerfer eingebaut wurde.

### Figurenbeschreibung

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine perspektivische Ansicht eines Ausführungsbeispiels eines erfindungsgemäßen Bauteils, welches mit einem erfindungsgemäßen Verfahren assembliert wurde;
Fig. 2 eine erste Bauteilkomponente des Bauteils gemäß Fig. 1;
Fig. 3 die erste Bauteilkomponente vor dem Aufgreifen durch einen Greifarm;
Fig. 4 die erste Bauteilkomponente nach dem Aufgreifen durch einen Greifarm;
Fig. 5 einen Kontaktabschnitt an einer Seite der ersten Bauteilkomponente;
Fig. 6 einen Halteabschnitt eines Greifarms;
Fig. 7 einen Kontaktabschnitt und einen Halteabschnitt vor dem Aufgreifen durch einen Greifarm; und
Fig. 8 einen Kontaktabschnitt und einen Halteabschnitt nach dem Aufgreifen durch einen Greifarm.

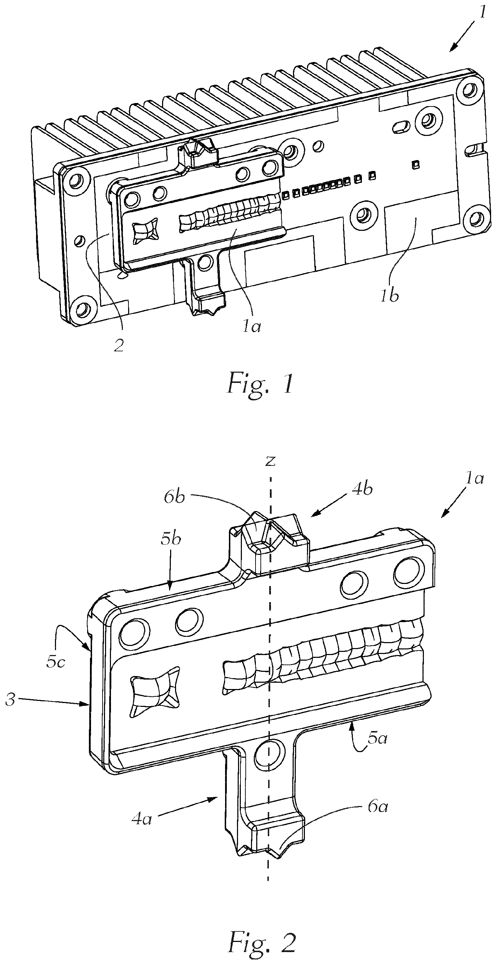

Fig. 1 zeigt ein Bauteil 1 für einen Kraftfahrzeugscheinwerfer, wobei das Bauteil 1 mit einem erfindungsgemäßen Verfahren zur automatisierten Assemblierung hergestellt wurde.

Das Bauteil 1 umfasst eine erste Bauteilkomponente 1a und eine zweite Bauteilkomponente 1b, welche derart ausgestaltet sind, zusammen in einem assemblierten Zustand das Bauteil 1 für einen Kraftfahrzeugscheinwerfer auszubilden.

Fig. 2 zeigt die erste Bauteilkomponente 1a, welche ein erstes Aufnahmeelement 4a an einer ersten Seite 5a und ein zweites Aufnahmeelement 4b an einer, der ersten Seite 5a gegenüberliegenden, zweiten Seite 5b aufweist. Das erste Aufnahmeelement 4a hat einen ersten Kontaktabschnitt 6a und das zweite Aufnahmeelement 4b hat einen zweiten Kontaktabschnitt 6b. Das erste Aufnahmeelement 4a erstreckt sich von der ersten Seite 5a der ersten Bauteilkomponente 1a, entlang einer Hauptachse z der ersten Bauteilkomponente, weg. Das zweite Aufnahmeelement 4b erstreckt sich von der zweiten Seite 5b der ersten Bauteilkomponente 1a, entlang der Hauptachse z der ersten Bauteilkomponente, weg.

In dem gezeigten Ausführungsbeispiel ist eine Längserstreckung des ersten Aufnahmeelements 4a länger als eine Längserstreckung des zweiten Aufnahmeelements 4b. Mit anderen Worten ist das erste Aufnahmeelement 4a länger als das zweite Aufnahmeelement 4b. In dem gezeigten Ausführungsbeispiel ist an einer Unterseite der ersten Bauteilkomponente 1a das erste Aufnahmeelement 4a und an einer Oberseite der ersten Bauteilkomponente 1a das zweite Aufnahmeelement 4b angeordnet. Selbstverständlich können das erste Aufnahmeelement 4a und das zweite Aufnahmeelement 6b auch an den vertikalen Seitenkanten der ersten Bauteilkomponente 1a angeordnet sein. Um ein erfindungsgemäßes Aufgreifen zu ermöglichen, sind zumindest zwei Aufnahmeelemente nötig, welche bevorzugt an gegenüberliegenden Seiten bzw. Kanten der ersten Bauteilkomponente 1a angeordnet sind.

An dem ersten Kontaktabschnitt 6a ist eine Ausnehmung oder Ausbuchtung und an dem zweiten Kontaktabschnitt 6b ist eine Ausnehmung oder Ausbuchtung ausgebildet. In dem gezeigten Ausführungsbeispiel ist eine kreuzförmige bzw. x-förmige Ausbuchtung dargestellt. Die Ausnehmung oder Ausbuchtung erstreckt sich an dem ersten Kontaktabschnitt 6a entlang von zumindest zwei Richtungen, wobei sich die Ausnehmung oder Ausbuchtung an dem zweiten Kontaktabschnitt 6b ebenfalls entlang von zumindest zwei Richtungen erstreckt.

Die Assemblierung des Bauteils 1 erfolgt durch eine (nicht gezeigte) Assemblierungsvorrichtung, welche zur automatisierten Assemblierung der ersten Bauteilkomponente 1a an der zweiten Bauteilkomponente 1b eingerichtet ist. Derartige Assemblierungsvorrichtungen sind im Stand der Technik bekannt. Erfindungsgemäß ist eine ansteuerbare Greifarmvorrichtung 7 vorgesehen, welche mit Assemblierungsvorrichtungen gemäß dem Stand der Technik kompatibel ist.

Die Greifarmvorrichtung 7 hat einen ersten Greifarm 7a und einem zweiten Greifarm 7b. Die Greifarmvorrichtung 7 ist dazu eingerichtet, durch ein Zusammenwirken des ersten Greifarms 7a mit dem zweiten Greifarm 7b die erste Bauteilkomponente 1a aufzugreifen. Der erste Greifarm 7a ist parallel zu dem zweiten Greifarm 7b angeordnet. Die Assemblierungsvorrichtung ist dazu eingerichtet, die mit der Greifarmvorrichtung 7 aufgegriffene erste Bauteilkomponente 1a an der zweiten Bauteilkomponente 1b zur Ausbildung des Bauteils 1 zu assemblieren. Die Greifarmvorrichtung 7 ist derart ausgestaltet, dass sie mit bekannten Assemblierungsvorrichtungen zusammen verwendet werden kann.

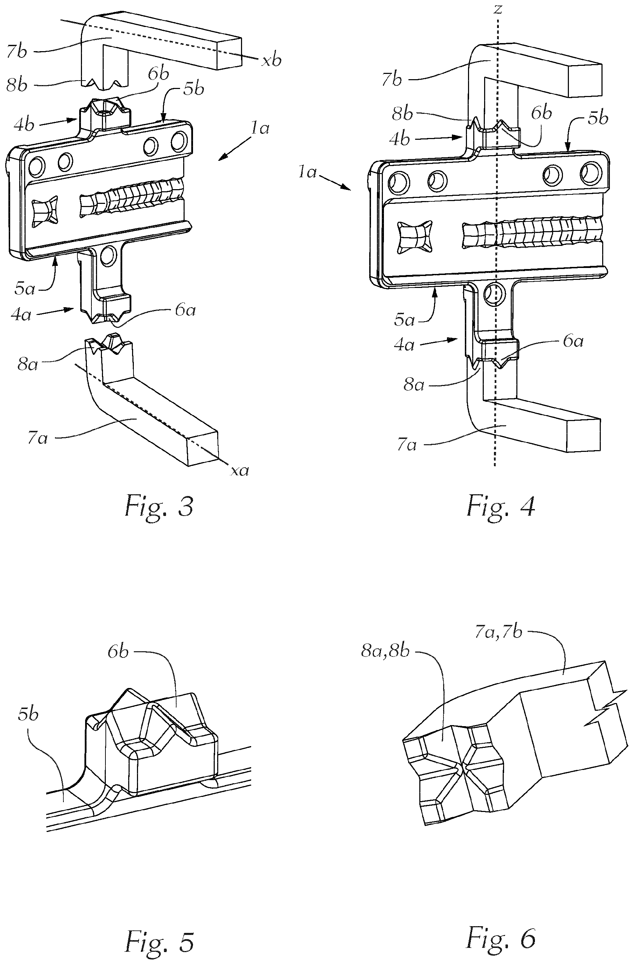

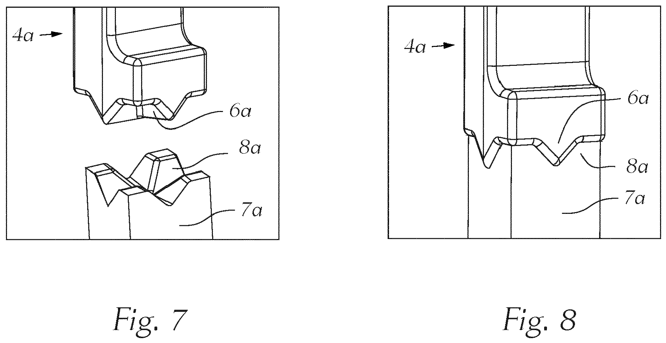

Wie in den Fig. 3 bis 8 gezeigt, ist an dem ersten Greifarm 7a ein zu der Ausnehmung oder Ausbuchtung des ersten Kontaktabschnitts 6a komplementär ausgestalteter erster Halteabschnitt 8a ausgebildet. An dem zweiten Greifarm 7b ist ein zu der Ausnehmung oder Ausbuchtung des zweiten Kontaktabschnitts 6b komplementär ausgestalteter zweiter Halteabschnitt 8b ausgebildet. Der erste Halteabschnitt 8a und der zweite Halteabschnitt 8b sind entlang einer Hauptachse z der Greifarmvorrichtung 7 angeordnet. Im aufgegriffenen Zustand (vgl. Fig. 4 und Fig. 8) der ersten Bauteilkomponente 1a durch die Greifarmvorrichtung 7 greift der erste Greifarm 7a an dem ersten Kontaktabschnitt 6a derart an, dass der erste Halteabschnitt 8a in die Ausnehmung oder Ausbuchtung des ersten Kontaktabschnitts 6a eingreift. Der zweite Greifarm 7b greift an dem zweiten Kontaktabschnitt 6b derart an, dass der zweite Halteabschnitt 8b in die Ausnehmung oder Ausbuchtung des zweiten Kontaktabschnitts 6b eingreift, wobei durch diese beiden Eingriffe die erste Bauteilkomponente 1a im Wesentlichen zwischen dem ersten Greifarm 7a und dem zweiten Greifarm 7b gehalten und gegen eine Verdrehung um die Hauptachse z gesichert ist. Der erste Halteabschnitt 8a und der zweite Halteabschnitt 8b liegen jeweils in einer Ebene, welche im Wesentlichen orthogonal auf die Hauptachse z orientiert ist. Der erste Greifarm 7a hat eine Längsachse xa und der zweite Greifarm 7b hat eine Längsachse xb, wobei die Längsachsen xa, xb jeweils orthogonal auf die Hauptachse z orientiert sind (vgl. Fig. 3).

Im Zuge des erfindungsgemäßen Assemblierungsverfahrens wird die Greifarmvorrichtung 7 an der ersten Bauteilkomponente 1a derart positioniert, dass der erste Greifarm 7a an dem ersten Kontaktabschnitt 6a des ersten Aufnahmeelements 4a und der zweite Greifarm 7b an dem zweiten Kontaktabschnitt 6b des zweiten Aufnahmeelements 4b angreifen können. Die Endposition des Positionierens vor dem Aufgreifen ist in Fig. 3 und im Detail in Fig. 7 veranschaulicht.

In weiterer Folge erfolgt das Aufgreifen der ersten Bauteilkomponente 1a durch ein Zusammenwirken des ersten Greifarms 7a mit dem zweiten Greifarm 7b. Das Zusammenwirken ist derart, dass nach dem Aufgreifen der erste Halteabschnitt 8a in die Ausnehmung oder Ausbuchtung des ersten Kontaktabschnitts 6a und der zweite Halteabschnitt 8b in die Ausnehmung oder Ausbuchtung des zweiten Kontaktabschnitts 6b eingreift, sodass die erste Bauteilkomponente 1a gehalten und gegen ein Verdrehen um die Hauptachse z gesichert ist. Dieser Zustand ist in den Fig. 4 und im Detail in Fig. 8 gezeigt.

Der nächste Schritt im erfindungsgemäßen Verfahren ist das Positionieren der aufgegriffenen ersten Bauteilkomponente 1a an der zweiten Bauteilkomponente 1b mittels der Assemblierungsvorrichtung derart, dass die erste Bauteilkomponente 1a an der zweiten Bauteilkomponente 1b zur Ausbildung des Bauteils 1 assemblierbar ist.

Zuletzt erfolgt das Assemblieren der ersten Bauteilkomponente 1a an der zweiten Bauteilkomponente 1b zur Ausbildung des Bauteils 1. Das assemblierte Bauteil 1 ist in Fig. 1 abgebildet.

Die erste Bauteilkomponente 1a hat in dem gezeigten Ausführungsbeispiel einen Assemblierungsabschnitt 3 und die zweite Bauteilkomponente 1b hat einen Assemblierungsgegenabschnitt 2. Im assemblierten Zustand ist die erste Bauteilkomponente 1a mit dem Assemblierungsabschnitt 3 an dem Assemblierungsgegenabschnitt 2 der zweiten Bauteilkomponente 1b assembliert. Der Assemblierungsabschnitt 3 ist an einer von der ersten Seite 5a und der zweiten Seite 5b unterschiedlichen dritten Seite 5c der ersten Bauteilkomponente 1a angeordnet. Die erste Bauteilkomponente 1a ist derart ausgestaltet, dass die dritte Seite 5c orthogonal zur ersten Seite 5a und/oder zweiten Seite 5b ist.

Die erste Bauteilkomponente 1a kann ein optisches Bauteil, beispielsweise eine Linse, ein Mikrolinsen-Array oder ein Mikrospiegelaktor-Element (DMD-Element) umfassen, welches einen optisch wirksamen Bereich und einen optisch unwirksamen Bereich aufweist. Das erste Aufnahmeelement 4a und das zweite Aufnahmeelement 4b können jeweils an dem optisch unwirksamen Bereich angeordnet sein. Vorzugsweise ist der Assemblierungsabschnitt 3 an dem optisch wirksamen Bereich ausgebildet. Der optisch unwirksame Bereich kann im Wesentlichen um den optisch wirksamen Bereich herum angeordnet sein.

Die zweite Bauteilkomponente 1b kann zumindest eine oder mehrere der folgenden Komponenten umfassen: ein Leuchtmittel, vorzugsweise umfassend eine Kühlvorrichtung zur Kühlung des Leuchtmittels, zur Abstrahlung von Licht auf die erste Bauteilkomponente 1a, eine Leiterplatte zur Ansteuerung des Leuchtmittels, eine Haltevorrichtung zum Halten der ersten Bauteilkomponente 1a oder eine beliebige Kombination daraus. In dem in Fig. 1 gezeigten Ausführungsbeispiel umfasst die zweite Bauteilkomponente 1b eine Leiterplatte mit einem Leuchtmittel und eine Kühlvorrichtung zum Kühlen des Leuchtmittels. Die erste Bauteilkomponente 1a umfasst eine Vielzahl von in einer Reihe nebeneinander angeordneter Linsen, wobei das Leuchtmittel dazu eingerichtet ist, Licht auf die Linsen abzustrahlen. An einer der ersten Bauteilkomponente 1a abgewandten Seite der zweiten Bauteilkomponente 1b ist die Kühlvorrichtung angeordnet.

Das erste Aufnahmeelement 4a und das zweite Aufnahmeelement 4b können einstückig mit der ersten Bauteilkomponente 1a ausgebildet sein, wobei vorzugsweise die erste Bauteilkomponente 1a, das erste Aufnahmeelement 4a und das zweite Aufnahmeelement 4b zusammen einstückig mit einem Spritzgussverfahren hergestellt sind.

### LISTE DER BEZUGSZEICHEN

- 1: Bauteil
- 1a: erste Bauteilkomponente
- 1b: zweite Bauteilkomponente
- 2: Assemblierungsgegenabschnitt
- 3: Assemblierungsabschnitt
- 4a: erstes Aufnahmeelement
- 4b: zweites Aufnahmeelement
- 5a: erste Seite der ersten Bauteilkomponente
- 5b: zweite Seite der ersten Bauteilkomponente
- 5c: dritte Seite der ersten Bauteilkomponente
- 6a: erster Kontaktabschnitt
- 6b: zweiter Kontaktabschnitt
- 7: Greifarmvorrichtung
- 7a: erster Greifarm
- 7b: zweiter Greifarm
- 8a: erster Halteabschnitt
- 8b: zweiter Halteabschnitt
- z: Hauptachse der ersten Bauteilkomponente
- xa: Längsachse des ersten Greifarms
- xb: Längsachse des zweiten Greifarms

## Patentansprüche

1. Verfahren zur automatisierten Assemblierung eines Bauteils (1) für einen Kraftfahrzeugscheinwerfer, wobei das Verfahren die folgenden chronologischen Schritte aufweist:
* Bereitstellen einer ersten Bauteilkomponente (1a) und einer zweiten Bauteilkomponente (1b), welche derart ausgestaltet sind, zusammen in einem assemblierten Zustand ein Bauteil (1) für einen Kraftfahrzeugscheinwerfer auszubilden, wobei die erste Bauteilkomponente (1a) ein erstes Aufnahmeelement (4a) an einer ersten Seite (5a) der ersten Bauteilkomponente (1a) und ein zweites Aufnahmeelement (4b) an einer, der ersten Seite (5a) gegenüberliegenden, zweiten Seite (5b) der ersten Bauteilkomponente (1a) aufweist, wobei das erste Aufnahmeelement (4a) einen ersten Kontaktabschnitt (6a) und das zweite Aufnahmeelement (4b) einen zweiten Kontaktabschnitt (6b) aufweist, wobei an dem ersten Kontaktabschnitt (6a) eine Ausnehmung oder Ausbuchtung und an dem zweiten Kontaktabschnitt (6b) eine Ausnehmung oder Ausbuchtung ausgebildet ist,
* Bereitstellen einer Assemblierungsvorrichtung zur automatisierten Assemblierung der ersten Bauteilkomponente (1a) an der zweiten Bauteilkomponente (1b) zum Ausbilden des Bauteils (1), wobei die Assemblierungsvorrichtung eine ansteuerbare Greifarmvorrichtung (7) mit einem ersten Greifarm (7a) und einem zweiten Greifarm (7b) aufweist, wobei die Greifarmvorrichtung (7) dazu eingerichtet ist, durch ein Zusammenwirken des ersten Greifarms (7a) mit dem zweiten Greifarm (7b) die erste Bauteilkomponente (1a) aufzugreifen, wobei vorzugsweise der erste Greifarm (7a) parallel zu dem zweiten Greifarm (7b) angeordnet ist, wobei die Assemblierungsvorrichtung dazu eingerichtet ist, die aufgegriffene erste Bauteilkomponente (1a) an der zweiten Bauteilkomponente (1b) zur Ausbildung des Bauteils (1) zu assemblieren, wobei an dem ersten Greifarm (7a) ein zu der Ausnehmung oder Ausbuchtung des ersten Kontaktabschnitts (6a) komplementär ausgestalteter erster Halteabschnitt (8a) ausgebildet ist, wobei an dem zweiten Greifarm (7b) ein zu der Ausnehmung oder Ausbuchtung des zweiten Kontaktabschnitts (6b) komplementär ausgestalteter zweiter Halteabschnitt (8b) ausgebildet ist, wobei der erste Halteabschnitt (8a) und der zweite Halteabschnitt (8b) entlang einer Hauptachse (z) der Greifarmvorrichtung (7) angeordnet sind, wobei im aufgegriffenen Zustand der ersten Bauteilkomponente (1a) durch die Greifarmvorrichtung (7) der erste Greifarm (7a) an dem ersten Kontaktabschnitt (6a) derart angreift, dass der erste Halteabschnitt (8a) in die Ausnehmung oder Ausbuchtung des ersten Kontaktabschnitts (6a) eingreift und der zweite Greifarm (7b) an dem zweiten Kontaktabschnitt (6b) derart angreift, dass der zweite Halteabschnitt (8b) in die Ausnehmung oder Ausbuchtung des zweiten Kontaktabschnitts (6b) eingreift, wobei durch die Eingriffe die erste Bauteilkomponente (1a) im Wesentlichen zwischen dem ersten Greifarm (7a) und dem zweiten Greifarm (7b) gehalten und gegen eine Verdrehung um die Hauptachse (z) gesichert ist,
* Positionieren der Greifarmvorrichtung (7) an der ersten Bauteilkomponente (1a) derart, dass der erste Greifarm (7a) an dem ersten Kontaktabschnitt (6a) des ersten Aufnahmeelements (4a) und der zweite Greifarm (7b) an dem zweiten Kontaktabschnitt (6b) des zweiten Aufnahmeelements (4b) angreifen können,
* Aufgreifen der ersten Bauteilkomponente (1a) durch ein Zusammenwirken des ersten Greifarms (7a) mit dem zweiten Greifarm (7b) derart, dass nach dem Aufgreifen der erste Halteabschnitt (8a) in die Ausnehmung oder Ausbuchtung des ersten Kontaktabschnitts (6a) und der zweite Halteabschnitt (8b) in die Ausnehmung oder Ausbuchtung des zweiten Kontaktabschnitts (6b) eingreift, sodass die erste Bauteilkomponente (1a) gehalten und gegen ein Verdrehen um die Hauptachse (z) gesichert ist,
* Positionieren der aufgegriffenen ersten Bauteilkomponente (1a) an der zweiten Bauteilkomponente (1b) mittels der Assemblierungsvorrichtung derart, dass die erste Bauteilkomponente (1a) an der zweiten Bauteilkomponente (1b) zur Ausbildung des Bauteils (1) assemblierbar ist,
* Assemblieren der ersten Bauteilkomponente (1a) an der zweiten Bauteilkomponente (1b) zur Ausbildung des Bauteils (1).

2. Verfahren nach Anspruch 1, wobei sich das erste Aufnahmeelement (4a) von der ersten Seite (5a) der ersten Bauteilkomponente (1a) und sich das zweite Aufnahmeelement (4b) von der zweiten Seite (5b) der ersten Bauteilkomponente (1a) weg erstrecken.

3. Verfahren nach einem der vorhergehenden Ansprüche, wobei der erste Halteabschnitt (8a) und der zweite Halteabschnitt (8b) jeweils in einer Ebene liegen, welche im Wesentlichen orthogonal auf die Hauptachse (z) orientiert sind, wobei vorzugsweise der erste Greifarm (7a) eine Längsachse (xa) und der zweite Greifarm (7b) eine Längsachse (xb) aufweisen, wobei die Längsachsen (xa, xb) jeweils orthogonal auf die Hauptachse (z) orientiert sind.

4. Verfahren nach einem der vorhergehenden Ansprüche, wobei die erste Bauteilkomponente (1a) einen Assemblierungsabschnitt (3) und die zweite Bauteilkomponente (1b) einen Assemblierungsgegenabschnitt (2) aufweist, wobei im assemblierten Zustand die erste Bauteilkomponente (1a) mit dem Assemblierungsabschnitt (3) an dem Assemblierungsgegenabschnitt (2) der zweiten Bauteilkomponente (1b) assembliert ist.

5. Verfahren nach Anspruch 4, wobei der Assemblierungsabschnitt (3) an einer von der ersten Seite (5a) und der zweiten Seite (5b) unterschiedlichen dritten Seite (5c) der ersten Bauteilkomponente (1a) angeordnet ist.

6. Verfahren nach Anspruch 5, wobei die erste Bauteilkomponente (1a) derart ausgestaltet ist, dass die dritte Seite (5c) orthogonal zur ersten Seite (5a) und/oder zweiten Seite (5b) ist.

7. Verfahren nach einem der vorhergehenden Ansprüche, wobei die erste Bauteilkomponente (1a) ein optisches Bauteil, beispielsweise eine Linse, ein Mikrolinsen-Array oder ein Mikrospiegelaktor-Element umfasst, welches einen optisch wirksamen Bereich und einen optisch unwirksamen Bereich aufweist.

8. Verfahren nach Anspruch 7, wobei das erste Aufnahmeelement (4a) und das zweite Aufnahmeelement (4b) jeweils an dem optisch unwirksamen Bereich und vorzugsweise der Assemblierungsabschnitt (3) an dem optisch wirksamen Bereich ausgebildet sind.

9. Verfahren nach Anspruch 7 oder 8, wobei der optisch unwirksame Bereich im Wesentlichen um den optisch wirksamen Bereich herum angeordnet ist.

10. Verfahren nach einem der vorhergehenden Ansprüche, wobei die zweite Bauteilkomponente (1b) zumindest eine oder mehrere der folgenden Komponenten umfasst: ein Leuchtmittel, vorzugsweise umfassend eine Kühlvorrichtung zur Kühlung des Leuchtmittels, zur Abstrahlung von Licht auf die erste Bauteilkomponente (1a), eine Leiterplatte zur Ansteuerung des Leuchtmittels, eine Haltevorrichtung zum Halten der ersten Bauteilkomponente (1a) oder eine beliebige Kombination aus diesen Komponenten.

11. Verfahren nach einem der vorhergehenden Ansprüche, wobei das erste Aufnahmeelement (4a) und das zweite Aufnahmeelement (4b) einstückig mit der ersten Bauteilkomponente (1 a) ausgebildet sind, wobei vorzugsweise die erste Bauteilkomponente (1a), das erste Aufnahmeelement (4a) und das zweite Aufnahmeelement (4b) zusammen einstückig mit einem Spritzgussverfahren hergestellt sind.

12. Verfahren nach einem der vorhergehenden Ansprüche, wobei sich die Ausnehmung oder Ausbuchtung an dem ersten Kontaktabschnitt (6a) entlang von zumindest zwei Richtungen erstreckt, wobei sich die Ausnehmung oder Ausbuchtung an dem zweiten Kontaktabschnitt (6b) entlang von zumindest zwei Richtungen erstreckt.

13. System, umfassend ein Bauteil (1) für einen Kraftfahrzeugscheinwerfer und eine Greifarmvorrichtung (7) für eine Assemblierungsvorrichtung zur automatisierten Assemblierung des Bauteils,
wobei das Bauteil eine erste Bauteilkomponente (1a) und eine zweite Bauteilkomponente (1b) aufweist, welche zusammen in einem assemblierten Zustand das Bauteil (1) ausbilden, wobei die erste Bauteilkomponente (1a) ein erstes Aufnahmeelement (4a) an einer ersten Seite (5a) der ersten Bauteilkomponente (1a) und ein zweites Aufnahmeelement (4b) an einer, der ersten Seite (5a) gegenüberliegenden, zweiten Seite (5b) der ersten Bauteilkomponente (1a) aufweist, wobei das erste Aufnahmeelement (4a) einen ersten Kontaktabschnitt (6a) und das zweite Aufnahmeelement (4b) einen zweiten Kontaktabschnitt (6b) aufweist, wobei an dem ersten Kontaktabschnitt (6a) eine Ausnehmung oder Ausbuchtung und an dem zweiten Kontaktabschnitt (6b) eine Ausnehmung oder Ausbuchtung ausgebildet ist,
wobei die Greifarmvorrichtung (7) einen ersten Greifarm (7a) und einen zweiten Greifarm (7b) aufweist, wobei die Greifarmvorrichtung (7) an einem Assemblierungsroboter anordenbar und durch diesen ansteuerbar ausgebildet ist, und dazu eingerichtet ist, durch ein Zusammenwirken des ersten Greifarms (7a) mit dem zweiten Greifarm (7b) die erste Bauteilkomponente (1a) aufzugreifen, wobei vorzugsweise der erste Greifarm (7a) parallel zu dem zweiten Greifarm (7b) angeordnet ist, wobei an dem ersten Greifarm (7a) ein zu der Ausnehmung oder Ausbuchtung des ersten Kontaktabschnitts (6a) komplementär ausgestalteter erster Halteabschnitt (8a) und an dem zweiten Greifarm (7b) ein zu der Ausnehmung oder Ausbuchtung des zweiten Kontaktabschnitts (6b) komplementär ausgestalteter zweiter Halteabschnitt (8b) derart ausgebildet ist, dass im aufgegriffenen Zustand der ersten Bauteilkomponente (1a) durch die Greifarmvorrichtung (7) der erste Greifarm (7a) an dem ersten Kontaktabschnitt (6a) derart angreift, dass der erste Halteabschnitt (8a) in die Ausnehmung oder Ausbuchtung des ersten Kontaktabschnitts (6a) eingreift und der zweite Greifarm (7b) an dem zweiten Kontaktabschnitt (6b) derart angreift, dass der zweite Halteabschnitt (8b) in die Ausnehmung oder Ausbuchtung des zweiten Kontaktabschnitts (6b) eingreift, wobei der erste Halteabschnitt (8a) und der zweite Halteabschnitt (8b) entlang einer Hauptachse (z) der Greifarmvorrichtung (7) angeordnet sind, wobei die Eingriffe derart sind, dass die erste Bauteilkomponente (1a) im Wesentlichen zwischen dem ersten Greifarmabschnitt (7a) und dem zweiten Greifarmabschnitt (7b) haltbar und gegen eine Verdrehung relativ zu der Greifarmvorrichtung sicherbar ist.

14. Bauteil (1) für einen Kraftfahrzeugscheinwerfer, wobei das Bauteil (1) mit einem Verfahren zur automatisierten Assemblierung nach einem der Ansprüche 1-12 assembliert wurde.

15. Kraftfahrzeugscheinwerfer umfassend ein Bauteil (1) nach Anspruch 14 oder ein Bauteil (1), welches mit einem Verfahren zur automatisierten Assemblierung nach einem der Ansprüche 1-12 assembliert wurde.
